# FASCICULE DE BREVET EUROPEEN

(11) **EP 0 825 941 B1**
(45) Date de publication et mention de la délivrance du brevet: **02.06.1999**
(21) Numéro de dépôt: 96906811.3
(22) Date de dépôt: 12.03.1996
(51) Int. Cl.: B60T 13/52, B60T 17/00

(54) **SERVOMOTEUR A CLAPET D'AIR ADDITIONNEL SUR LA TIGE DE COMMANDE**
SERVOMOTOR MIT ZUSÄTZLICHEM LUFTVENTIL AN DER BETÄTIGUNGSSTANGE
SERVOMOTOR WITH ADDITIONAL AIR VALVE ACTUATED BY A CONTROL ROD

(30) Priorité: 17.05.1995 FR 9505792
(43) Date de publication de la demande: 04.03.1998
(73) Titulaire: Bosch Systemes de Freinage, 93700 Drancy (FR)
(72) Inventeur: SCHEWE, Jörg, F-75019 Paris (FR)
(74) Mandataire: Bentz, Jean-Paul
(86) Numéro de dépôt international: FR9600376
(87) Numéro de publication internationale: WO9636517

(56) Documents cités:
- US-A- 3 972 263
- US-A- 4 103 590

## Description

La présente invention concerne un servomoteur pneumatique de freinage utilisant des première et seconde sources de pression d'air délivrant des première et seconde pressions respectives et différentes, ce servomoteur comprenant une enveloppe rigide séparée par au moins une cloison mobile étanche en au moins deux chambres dont la première est reliée à la première source et dont la seconde est susceptible d'être sélectivement reliée, au moyen d'un clapet, à l'une quelconque des deux sources, la cloison mobile étant susceptible d'être sollicitée par la différence entre les pressions établies dans les chambres pour entraîner un piston pneumatique essentiellement cylindrique coulissant de façon étanche par rapport à l'enveloppe et portant le clapet, l'intérieur de ce piston étant séparé de la seconde source par un filtre d'épuration, et le clapet étant actionné par une tige de commande susceptible de coulisser par rapport au piston, suivant un axe, depuis une position de repos jusqu'à une position d'actionnement avancée.

Des dispositifs de ce type sont bien connus dans l'art antérieur, tel que représenté par exemple par le brevet US-3 972 263.

Malgré le caractère traditionnel des techniques concernées, les servomoteurs continuent de faire l'objet de recherches importantes, visant à en optimiser la caractéristiques de fonctionnement.

Au nombre de ces recherches figurent notamment des tentatives pour réduire à la fois le niveau sonore en fonctionnement des servomoteurs et leur temps de réponse à la suite d'une sollicitation, la réduction simultanée de ces deux paramètres étant rendue très délicate par le fait qu'un servomoteur est d'autant plus silencieux que l'air qu'il admet dans le chambre arrière est plus filtré, alors qu'il présente un temps de réponse d'autant plus court que l'air qu'il admet est moins filtré.

Ce problème, déjà envisagé dans le brevet US-3 972 263 précité, est résolu dans ce document antérieur par l'emploi d'un filtre d'épuration déformable, qui se trouve comprimé pour une force d'entrée importante, de manière à faciliter l'admission d'air et à réduire le temps de réponse de ce servomoteur.

Un tel arrangement oblige cependant à recourir à l'emploi d'une tige de commande en plusieurs pièces et à un choix particulier du matériau constituant le filtre d'épuration.

L'invention se situe dans ce contexte, et a pour but de proposer un servomoteur qui réponde à l'attente du public pour ce qui concerne la réduction du niveau sonore en fonctionnement, tout en offrant un temps de réponse au moins aussi satisfaisant que ceux des servomoteurs de l'art antérieur, dans tous les cas où le besoin d'un temps de réponse court se fait sentir.

A cette fin, le servomoteur de l'invention est essentiellement caractérisé en ce que la tige de commande coulisse dans un manchon qui traverse axialement le filtre d'épuration, en ce que le manchon et la tige de commande présentent des première et seconde sections respectives en regard l'une de l'autre et dont la seconde au moins évolue le long dudit axe, ces sections adoptant des positions relatives différentes selon que la tige de commande est dans sa position de repos ou dans sa position d'actionnement avancée, et en ce que les sections respectives de la tige de commande et du manchon font apparaître entre elles, lorsque la tige de commande est dans sa position d'actionnement avancée, un passage d'air qui s'établit entre la seconde source et l'intérieur du piston, et qui se trouve au contraire obturé par les sections respectives de la tige de commande et du manchon lorsque la tige de commande est dans sa position de repos.

Le manchon comporte de préférence des pions de guidage internes permettant de centrer la tige de commande par rapport au manchon.

D'autres caractéristiques et avantages de l'invention ressortiront clairement de la description qui en est faite ci-après, à titre indicatif et nullement limitatif en référence aux dessins annexés, dans lesquels :

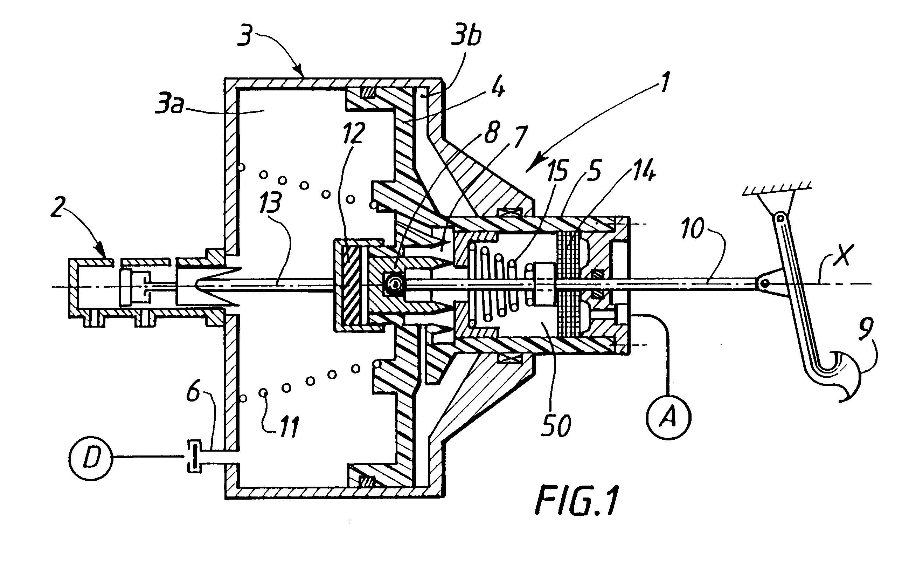

- la Figure 1 est une vue schématique en coupe d'un système de freinage à assistance pneumatique utilisant un servomoteur classique;

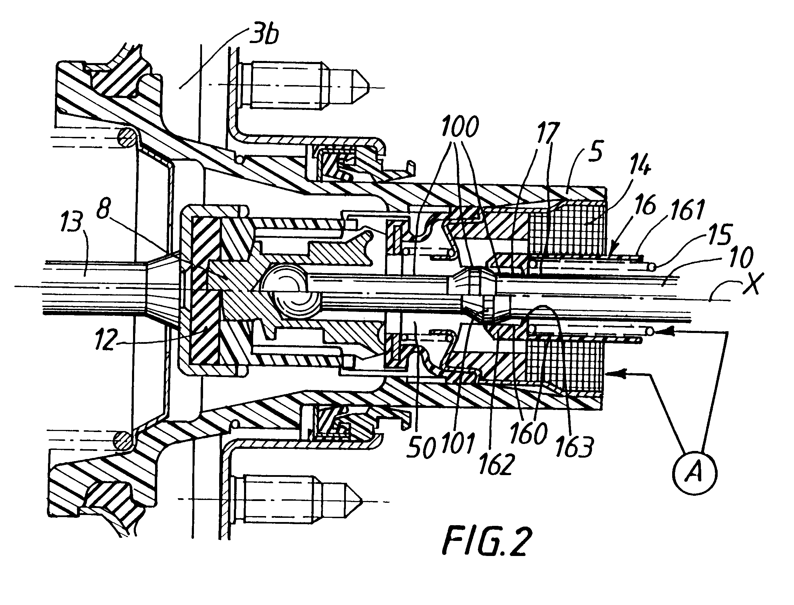

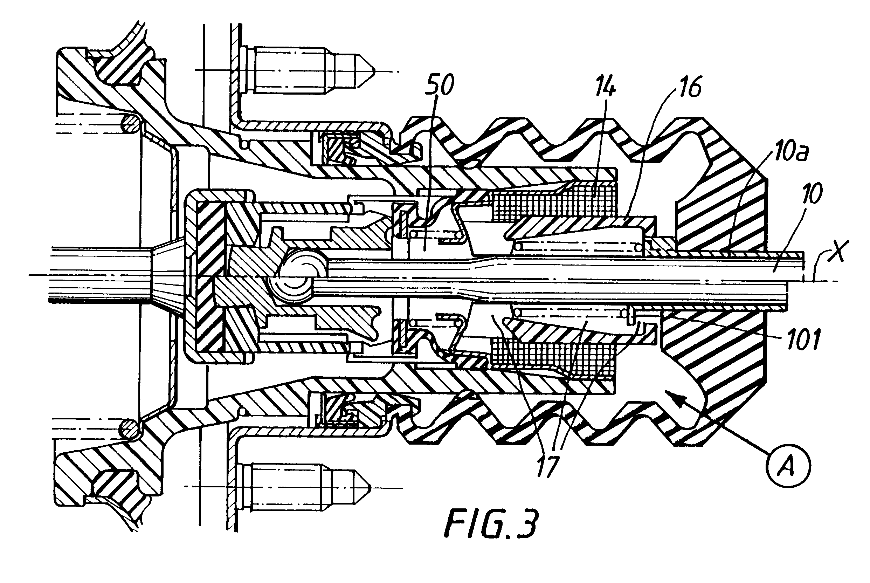

- la Figure 2 est une vue en coupe partielle d'un servomoteur conforme à un premier mode de réalisation possible de l'invention, dont la partie inférieure représente la tige de commande en position de repos, et dont la partie supérieure représente la tige de commande en position d'actionnement avancée; et
- la Figure 3 est une vue en coupe partielle d'un servomoteur conforme à un second mode de réalisation possible de l'invention, dont la partie supérieure représente la tige de commande en position de repos, et dont la partie inférieure représente la tige de commande en position d'actionnement avancée.

Dans la mesure où l'invention ne concerne qu'un perfectionnement apporté aux systèmes de freinage à assistance pneumatique, et où la constitution générale et le fonctionnement de ces derniers sont bien connus de l'homme de l'art, ces systèmes ne seront rapidement rappelés ici que pour permettre une compréhension totale du perfectionnement que représente l'invention.

Schématiquement, un système de ce type comprend un servomoteur 1 et un maître-cylindre 2.

Le servomoteur comprend lui-même une enveloppe rigide 3 séparée en deux chambres 3a et 3b, de façon étanche, par une cloison mobile 4 susceptible d'entraîner un piston pneumatique 5, essentiellement cylindrique et mobile à l'intérieur de l'enveloppe 3.

La chambre avant 3a, dont la face avant est fermée de façon étanche par le maître-cylindre 2, est en permanence raccordée à une source de basse pression D à travers une valve anti-retour 6.

La chambre arrière 3b est en revanche susceptible d'être sélectivement raccordée soit à la source de basse pression D, soit à une source de haute pression, par exemple à l'atmosphère A.

A cette fin, l'accès à la chambre arrière 3b est contrôlé par un clapet 7 et un plongeur 8, ce dernier étant relié à une pédale de frein 9 par l'intermédiaire d'une tige de commande 10 susceptible de coulisser, suivant un axe X, par rapport au piston 5.

Aussi longtemps que la tige de commande 10 n'est pas actionnée, c'est-à-dire en l'occurrence aussi longtemps qu'elle est tirée vers la droite, le clapet 7 établit normalement une communication entre les deux chambres 3a et 3b du servomoteur.

La chambre arrière 3b étant alors soumise à la même dépression que la chambre avant 3a, le piston 5 est repoussé vers la droite, en position de repos, par un ressort de rappel 11.

L'actionnement du plongeur 8, obtenu par un mouvement de la tige de commande 10 vers la gauche, effectué à l'encontre de la force exercée par un ressort de rappel 15, a pour effet, dans un premier temps, de déplacer le clapet 7 de façon qu'il isole l'une de l'autre les chambres 3a et 3b puis, dans un deuxième temps, de déplacer ce clapet de façon qu'il ouvre la chambre arrière 3b à la pression atmosphérique A.

La différence de pression entre les deux chambres, alors ressentie par la cloison mobile 4, exerce sur cette dernière une poussée qui tend à la déplacer vers la gauche et à lui permettre d'entraîner le piston 5 qui se déplace à son tour en comprimant le ressort 11.

L'effort de freinage exercé sur le plongeur 8 par la tige de commande 10, ou "force d'entrée", et l'effort d'assistance au freinage, ou "force d'assistance", résultant de la poussée de la cloison mobile 4, se conjuguent sur un disque de réaction 12 pour constituer une force d'actionnement transmise au maître-cylindre par l'intermédiaire d'une tige de poussée 13.

Comme le montre la Figure 1, le servomoteur comprend classiquement un filtre d'épuration 14, destiné à éviter toute pollution, par l'atmosphère A, de l'intérieur 50 du piston pneumatique, du clapet 7, et de la chambre arrière 3b.

Bien qu'un tel filtre soit nécessaire au moins pour atténuer le bruit de fonctionnement du servomoteur, il engendre un ralentissement du flux d'air utilisable par ce dernier, et dégrade le temps de réponse du servomoteur d'une façon d'autant plus sensible qu'il assure une isolation phonique importante.

Pour remédier à ce problème, le servomoteur de l'invention comporte des moyens d'obturation à ouverture commandée, installés entre la seconde source de pression A et l'intérieur 50 du piston, et illustrés à la figure 2.

Selon l'invention, la tige de commande 10 coulisse dans un manchon 16 qui est fixe par rapport au piston 5 et qui traverse axialement le filtre d'épuration 14, ce manchon présentant donc une première extrémité 161 externe au piston 5 et une seconde extrémité 162 interne à ce piston.

Par ailleurs, le manchon 16 et la tige de commande 10 présentent des première et seconde sections respectives 160 et 100, en regard l'une de l'autre, et dont la seconde au moins évolue le long de l'axe X, la tige de commande présentant par exemple un élargissement 101.

Comme la tige de commande est susceptible de coulisser par rapport au piston 5, ces sections 160 et 100 adoptent des positions relatives différentes selon que la tige de commande 10 est dans sa position de repos ou dans sa position d'actionnement avancée.

La présente invention tire parti de ce mouvement en prévoyant que les sections respectives de la tige de commande et du manchon soient conformées pour faire apparaître entre elles, lorsque la tige de commande 10 est dans sa position d'actionnement avancée, un passage d'air 17, qui s'établit entre la seconde source A et l'intérieur 50 du piston, et qui se trouve au contraire obturé par ces sections 160 et 100 lorsque la tige de commande 10 est dans sa position de repos.

Par exemple, selon le mode de réalisation de la figure 2, la tige de commande 10 présente un élargissement 101 qui pénètre dans la seconde extrémité 162 du manchon 16 et l'obture lorsque la tige de commande est dans sa position de repos (moitié inférieure de la figure 2), et qui sort de la seconde extrémité 162 du manchon et la dégage, lorsque la tige de commande 10 est dans sa position d'actionnement avancée (moitié supérieure de la figure 2), pour permettre l'établissement du passage d'air 17 entre la seconde source de pression A et l'intérieur 50 du piston.

Le fonctionnement de cet arrangement est le suivant.

Tant qu'une force de freinage nulle ou modérée est appliquée sur la tige de commande 10, cette dernière adopte, par rapport au piston 5, la position illustrée dans la moitié inférieure de la figure 2, ou une position légèrement plus avancée mais dans laquelle l'élargissement 100 obture toujours la seconde extrémité 162 du manchon 16.

En revanche, lorsqu'une force de freinage importante est brusquement appliquée sur la tige de commande 10, cette dernière adopte, par rapport au piston 5, la position illustrée dans la moitié supérieure de la figure 2, l'air pouvant alors librement circuler depuis la seconde source de pression A jusque dans le volume interne 50 du piston 5 à travers le passage 17.

L'air ainsi admis dans le servomoteur ne traversant pas le filtre, il ne subit aucun ralentissement de la part de ce dernier.

Comme le comprendra aisément l'homme de l'art, cet agencement permet donc à la fois de choisir un filtre assurant une isolation phonique importante, et d'obtenir nénamoins un temps de réponse minimal dans les situations de freinage d'urgence, dans lesquelles le confort d'un faible niveau sonore est sans objet.

Comme le montre la figure 2, le manchon 16 peut en outre comporter des pions de guidage internes 163 permettant de centrer la tige de commande 10 par rapport au manchon 16.

Comme le montre le second mode de réalisation de l'invention illustré à la figure 3, l'évolution de la section 100 de la tige de commande peut être obtenue grâce à l'utilisation d'une pièce rapportée 10a, et être localisée au voisinage de l'extrémité externe 161 du manchon 16, l'homme de métier étant de cette façon invité à comprendre que l'élargissement 101 de la tige de commande peut, de façon plus générale, être prévu en tout point de la longueur du manchon 16 et être réalisé par tout moyen.

## Revendications

1. Servomoteur pneumatique de freinage utilisant des première et seconde sources de pression d'air (D, A) délivrant des première et seconde pressions respectives et différentes, ce servomoteur comprenant une enveloppe rigide (3) séparée par au moins une cloison mobile étanche (4) en au moins deux chambres (3a, 3b) dont la première (3a) est reliée à la première source (D) et dont la seconde (3b) est susceptible d'être sélectivement reliée, au moyen d'un clapet (7), à l'une quelconque des deux sources (D, A), la cloison mobile étant susceptible d'être sollicitée par la différence entre les pressions établies dans les chambres pour entraîner un piston pneumatique (5) essentiellement cylindrique coulissant de façon étanche par rapport à l'enveloppe et portant le clapet (7), l'intérieur (50) de ce piston étant séparé de la seconde source par un filtre d'épuration (14) et le clapet (7) étant actionné par une tige de commande (10) susceptible de coulisser par rapport au piston (5), suivant un axe (X), depuis une position de repos jusqu'à une position d'actionnement avancée, caractérisé en ce que la tige de commande (10) coulisse dans un manchon (16) qui traverse axialement le filtre d'épuration (14), en ce que le manchon (16) et la tige de commande (10) présentent des première et seconde sections respectives (160, 100) en regard l'une de l'autre et dont la seconde au moins évolue le long dudit axe (X), ces sections adoptant des positions relatives différentes selon que la tige de commande (10) est dans sa position de repos ou dans sa position d'actionnement avancée, et en ce que les sections respectives (160, 100) de la tige de commande et du manchon font apparaître entre elles, lorsque la tige de commande (10) est dans sa position d'actionnement avancée, un passage d'air (17) qui s'établit entre la seconde source (A) et l'intérieur (50) du piston, et qui se trouve au contraire obturé par les sections respectives de la tige de commande et du manchon lorsque la tige de commande (10) est dans sa position de repos.

2. Servomoteur pneumatique suivant la revendication 1, caractérisé en ce que le manchon (16) comporte des pions de guidage internes (163) permettant de centrer la tige de commande (10) par rapport au manchon (16).

## Claims

1. Pneumatic brake booster using first and second sources of air pressure (D, A) delivering first and second respective and different pressures, this booster comprising a rigid casing (3) divided by at least one leaktight moving partition (4) into at least two chambers (3a, 3b), the first (3a) of which is connected to the first source (D), and the second (3b) of which can be connected selectively, by means of a valve (7), to either one of the two sources (D, A), it being possible for the moving partition to be urged by the difference in the pressures prevailing in the chambers in order to drive along an essentially cylindrical pneumatic piston (5) sliding in leaktight fashion with respect to the casing and bearing the valve (7), the inside (50) of this piston being separated from the second source by a purification filter (14), and the valve (7) being actuated by an operating rod (10) capable of sliding with respect to the piston (5) along an axis (X) from a position of rest to a forward actuating position, characterized in that the operating rod (10) slides in a sleeve (16) which passes axially through the purification filter (14), in that the sleeve (16) and the operating rod (10) have first and second respective sections (160, 100) facing one another, at least the second of which extends along the said axis (X), these sections adopting different relative positions depending on whether the operating rod (10) is in its position of rest or in its forward actuating position, and in that the respective sections (160, 100) of the operating rod and of the sleeve cause there to appear between them, when the operating rod (10) is in its forward actuating position, an air passage (17) which is set up between the second source (A) and the inside (50) of the piston, and which is, in contrast, closed off by the respective sections of the operating rod and of the sleeve when the operating rod (10) is in its position of rest.

2. Pneumatic booster according to Claim 1, characterized in that the sleeve (16) includes internal guide pegs (163) making it possible to center the operating rod (10) with respect to the sleeve (16).

## Patentansprüche

1. Pneumatischer Brems-Servomotor mit einer ersten und einer zweiten Luftdruckquelle (D, A), die einen ersten und einen davon abweichenden zweiten Druck liefern, wobei dieser Servomotor ein starres Gehäuse (3) enthält, das durch zumindest eine bewegliche dichte Wandung (4) in mindestens zwei Kammern (3a, 3b) unterteilt ist, von denen die erste (3a) mit der ersten Quelle (D) verbunden ist und die zweite (3b) durch ein Ventilelement (7) wahlweise mit einer der beiden Quellen (D, A) verbindbar ist, wobei die bewegliche Wandung mit der Differenz zwischen den in den Kammern erzeugten Drücken beaufschlagbar ist, um einen im wesentlichen zylindrischen Pneumatikkolben (5) mitzunehmen, der in diechter Weise relativ zum Gehäuse verschiebbar ist, und das Ventilelement (7) trägt, wobei der Innenraum (50) dieses Kolbens durch einen Reinigungsfilter (14) von der zweiten Quelle getrennt ist und das Ventilelement (7) durch eine Steuerstange (10) betätigt wird, die relativ zum Kolben (5) entlang einer Achse (X) von einer Ruhestellung in eine vorgerückte Betätigungsstellung verschiebbar ist, dadurch gekennzeichnet, daß die Steuerstange (10) in einer Hülse (16) gleitet, die den Reinigungsfilter (14) axial durchdringt, daß die Hülse (16) und die Steuerstange (10) einen ersten bzw. einen zweiten Querschnitt (160, 100) aufweisen, die einander gegenüberliegen und von denen zumindest der zweite sich entlang der Achse (X) entwickelt, wobei diese Querschnitte unterschiedliche Relativstellungen einnehmen, je nachdem ob die Steuerstange (10) sich in ihrer Ruhestellung oder in ihrer vorgerückten Betätigungsstellung befindet, und daß, wenn die Steuerstange (10) sich in ihrer vorgerückten Betätigungsstellung befindet, die jeweiligen Querschnitte (160, 100) der Steuerstange und der Hülse zwischen sich einen Luftdurchlaß (17) bilden, der sich zwischen der zweiten Quelle (A) und dem Innenraum (50) des Kolbens einstellt und der im Gegensatz dazu durch die jeweiligen Querschnitte der Steuerstange und der Hülse versperrt ist, wenn die Steuerstange (10) sich in ihrer Ruhestellung befindet.

2. Pneumatischer Servomotor nach Anspruch 1, dadurch gekennzeichnet, daß die Hülse (16) innenliegende Führungsteile (163) enthält, mit denen die Steuerstange (10) relativ zur Hülse (16) zentriert werden kann.
